# EUROPÄISCHE PATENTSCHRIFT

(11) **EP 0 602 546 B1**
(45) Veröffentlichungstag und Bekanntmachung des Hinweises auf die Patenterteilung: **22.05.1996**
(21) Anmeldenummer: 93119868.3
(22) Anmeldetag: 09.12.1993
(51) Int. Cl.: C09B 1/503, C07C 225/36

(54) **Verfahren zur Herstellung von 1-Amino-4-hydroxyanthrachinon**
Process for the preparation of 1-amino-4-hydroxyanthraquinone
Procédé de préparation de la 1-amino-4-hydroxyanthraquinone

(30) Priorität: 16.12.1992 DE 4242488
(43) Veröffentlichungstag der Anmeldung: 22.06.1994
(73) Patentinhaber: BASF Aktiengesellschaft, D-67063 Ludwigshafen (DE)
(72) Erfinder: Hahn, Erwin, Dr., D-6900 Heidelberg (DE); Patsch, Manfred, Dr., D-6706 Wachenheim (DE); Kilburg, Heike, Dr., D-6720 Speyer (DE)

(56) Entgegenhaltungen:
- CH-A- 158 831
- CH-A- 640 873
- US-A- 2 183 652
- US-A- 3 454 604

## Beschreibung

Die vorliegende Erfindung betrifft ein neues Verfahren zur Herstellung von 1-Amino-4-hydroxyanthrachinon durch Behandlung von 1,4-Dihydroxyanthrachinon mit Ammoniak.

Aus der CH-A-640 873 ist die Umsetzung von 1,4-Dihydroxyanthrachinon mit Ammoniak in wäßriger Phase unter Bildung von 1-Amino-4-hydroxyanthrachinon beschrieben.

Aufgabe der vorliegenden Erfindung war es, ein neues Herstellverfahren für 1-Amino-4-hydroxyanthrachinon bereitzustellen, das ebenfalls auf der Umsetzung von 1,4-Dihydroxyanthrachinon basiert und das Zielprodukt in einfacher Weise und mit hoher Ausbeute und Reinheit liefert.

Es wurde nun gefunden, daß die Herstellung von 1-Amino-4-hydroxyanthrachinon durch Behandeln von 1,4-Dihydroxyanthrachinon mit Ammoniak in wäßrigem Medium vorteilhaft gelingt, wenn man die Behandlung mit Ammoniak in Gegenwart einer Base und von katalytischen Mengen eines Reduktionsmittels bei einer Temperatur von 60 bis 150°C und einem Druck von 1 bis 30 bar vornimmt.

Je mol 1,4-Dihydroxyanthrachinon werden in der Regel 3 bis 20 mol, vorzugsweise 5 bis 12 mol, Ammoniak angewandt. Ammoniak kann dabei in Form einer wäßrigen Lösung oder in flüssigem Aggregatzustand zur Anwendung gelangen. Die Verwendung einer wäßrigen Lösung von Ammoniak ist bevorzugt. Von besonderem Interesse sind dabei wäßrige Lösungen, die, bezogen auf das Gewicht der Lösung, 1 bis 35 Gew.-%, vorzugsweise 20 bis 30 Gew. -% und insbesondere ca. 25 Gew.-% an Ammoniak aufweisen.

Geeignete Reduktionsmittel sind z.B. Alkalidithionite, wie Lithium-, Natrium- oder Kaliumdithionit, Hydroxyaceton, Thioharnstoff-S,S-dioxid oder Alkalisulfite, wie Lithium-, Natrium- oder Kaliumsulfit. Die Verwendung von Alkalidithioniten, insbesondere von Natriumdithionit, ist bevorzugt.

Erfindungsgemäß gelangt das Reduktionsmittel in katalytischer Menge zur Anwendung. Je mol 1,4-Dihydroxyanthrachinon verwendet man in der Regel 0,01 bis 0,3 mol, vorzugsweise 0,05 bis 0,1 mol, an Reduktionsmittel.

Das erfindungsgemäße Verfahren wird weiterhin in Gegenwart einer Base vorgenommen. Geeignete Basen sind insbesondere anorganische Basen, z.B. Alkalihydroxide, Alkalicarbonate oder Alkalihydrogencarbonate. Beispielhaft seien Lithium-, Natrium- oder Kaliumhydroxid, -carbonat oder -hydrogencarbonat genannt.

Die Verwendung von Alkalihydroxiden, insbesondere von Natriumhydroxid oder Kaliumhydroxid, ist bevorzugt, wobei die Anwendung von Natriumhydroxid besonders hervorzuheben ist.

Die Anwendung der Basen kann in fester Form oder vorzugsweise in Form einer wäßrigen Lösung erfolgen. Die wäßrigen Lösungen weisen dabei in der Regel eine Konzentration von 10 bis 80 Gew.-%, vorzugsweise 25 bis 50 Gew.-%, jeweils bezogen auf das Gewicht der Lösung, an Base auf.

Je mol 1,4-Dihydroxyanthrachinon kommen im allgemeinen 1 bis 5 mol, vorzugsweise 2 bis 3 mol, Base zur Anwendung.

Das neue Verfahren wird in wäßrigem Medium durchgeführt. Je Gewichtsteil 1,4-Dihydroxyanthrachinon werden üblicherweise 3 bis 10 Gewichtsteile, vorzugsweise 4 bis 7 Gewichtsteile, Wasser als Reaktionsmedium angewandt. (Bei der Verwendung einer wäßrigen Ammoniaklösung als Edukt sowie einer wäßrigen Lösung der Base ist das dort enthaltene Wasser jeweils in den genannten Werten berücksichtigt.)

Das neue Verfahren wird zweckmäßig so durchgeführt, daß man 1,4-Dihydroxyanthrachinon, Wasser, Base und Reduktionsmittel in einer Apparatur vorlegt. Bei der Verwendung einer wäßrigen Ammoniaklösung wird diese ebenfalls vorgelegt. Bei der Verwendung von flüssigem Ammoniak kann dieses nach Verschließen der Apparatur mittels einer entsprechenden Dosierapparatur zugeführt werden.

Nach dem druckdichten Verschluß der Reaktionsapparatur wird das Reaktionsgemisch auf eine Temperatur von 60 bis 150°C, vorzugsweise 80 bis 120°C, erhitzt, wobei sich ein Druck von 1 bis 30 bar einstellt. Bei Verwendung von ca. 25 gew.-%iger wäßriger Ammoniaklösung stellt sich vorzugsweise ein Druck von 2 bis 3 bar ein.

Nach einer Dauer von 2 bis 3 Stunden bei der obengenannten Temperatur ist die Umsetzung in der Regel beendet und die Apparatur wird auf Raumtemperatur abgekühlt und entspannt. 1-Amino-4-hydroxyanthrachinon fällt dabei als Niederschlag an und kann abgetrennt, gewaschen und getrocknet werden.

Das neue Verfahren, das sowohl in kontinuierlicher als auch diskontinuierlicher Arbeitsweise vorgenommen werden kann, liefert 1-Amino-4-hydroxyanthrachinon in hoher Reinheit und Ausbeute.

1-Amino-4-hydroxyanthrachinon ist ein wertvolles Zwischenprodukt zur Synthese von Anthrachinonfarbstoffen oder deren Vorprodukten. So kann man z.B. durch Umsetzung mit nur einem Äquivalent Chlor zu 1-Amino-2-chlor-4-hydroxyanthrachinon gelangen, aus dem z.B. 1-Amino-2-phenoxy-4-hydroxyanthrachinon (C.I. Disperse Red 60 (60 756)) erhalten werden kann.

Die folgenden Beispiele sollen die Erfindung näher erläutern.

### Beispiel 1

79,5 g 1,4-Dihydroxyanthrachinon, 210 ml Wasser, 5,6 g Natriumdithionit, 60 g 50 gew.-%ige Natronlauge und 240 g 25 gew.-%ige wäßrige Ammoniaklösung wurden in eine druckfeste Apparatur gegeben. Nach dem druckdichten Verschließen der Apparatur wurde auf 100°C erwärmt, wobei sich ein Eigendruck von 2,5 bar einstellte. Man hielt das Reaktionsgemisch 3 h unter diesen Bedingungen, kühlte dann ab und entspannte. Der vorhandene Niederschlag wurde abgesaugt, mit Wasser salzfrei gewaschen und getrocknet. Man erhielt 74,9 g 1-Amino-4-hydroxyanthrachinon (Reinheit laut GC: 90,7 %).

### Beispiel 2

70 ml Wasser, 26,5 g 1,4-Dihydroxyanthrachinon, 1,2 g Hydroxyaceton, 80 g 25 gew.-%ige wäßrige Ammoniaklösung und 20 g 50 gew.-%ige Natronlauge wurden in eine druckfeste Apparatur gegeben. Nach dem druckdichten Verschließen der Apparatur wurde auf 100°C erwärmt, wobei sich ein Eigendruck von 2,7 bar einstellte. Man hielt das Reaktionsgemisch 3 h unter diesen Bedingungen, kühlte dann ab und entspannte. Der vorhandene Niederschlag wurde abgesaugt, mit Wasser salzfrei gewaschen und getrocknet. Man erhielt 15,8 g 1-Amino-4-hydroxyanthrachinon (Reinheit laut GC: 71,1 %).

### Beispiel 3

70 ml Wasser, 26,5 g 1,4-Dihydroxyanthrachinon, 5 g Natriumdithionit und 20 g 50 gew.-%ige Natronlauge wurden in eine druckfeste Apparatur gegeben und druckdicht verschlossen. Nachdem 20 ml flüssiger Ammoniak aufgepreßt wurden, wurde auf 100°C erwärmt, wobei sich ein Druck von 25 bis 30 bar aufbaute. Man hielt das Reaktionsgemisch 3 h unter diesen Bedingungen, kühlte ab und entspannte. Der Niederschlag wurde abgesaugt, mit Wasser salzfrei gewaschen und getrocknet. Ausbeute: 21,5 g 1-Amino-4-hydroxyanthrachinon (Reinheit laut GC: 80 %).

In analoger Weise wurden die Beispiele 4 bis 6, die durch die folgenden Parameter gekennzeichnet sind, durchgeführt.

### Beispiel 4

70 ml Wasser, 26,5 g 1,4-Dihydroxyanthrachinon, 2,8 g Natriumdithionit, 80 g 25 gew.-%ige wäßrige Ammoniaklösung, 20 g 50 gew.-%ige Natronlauge; Reaktionsdauer: 3 h, Reaktionstemperatur: 80°C; Ausbeute: 22 g (Reinheit laut GC: 70,2 %).

### Beispiel 5

110 ml Wasser, 26,5 g 1,4-Dihydroxyanthrachinon, 2,8 g Natriumdithionit, 40 g 25 gew.-%ige wäßrige Ammoniaklösung, 20 g 50 gew.-%ige Natronlauge; Reaktionsdauer: 3 h, Reaktionstemperatur: 100°C; Ausbeute: 25,1 g (Reinheit laut GC: 80 %).

### Beispiel 6

70 ml Wasser, 26,5 g 1,4-Dihydroxyanthrachinon, 2,8 g Natriumsulfit, 60 g 25 gew.-%ige wäßrige Ammoniaklösung, 20 g 50 gew.-%ige Natronlauge; Reaktionsdauer: 3 h, Reaktionstemperatur: 100°C; Ausbeute: 24,8 g (Reinheit laut GC: 85,8 %).

## Patentansprüche

1. Verfahren zur Herstellung von 1-Amino-4-hydroxyanthrachinon durch Behandeln von 1,4-Dihydroxyanthrachinon mit Ammoniak in wäßrigem Medium, dadurch gekennzeichnet, daß man die Behandlung mit Ammoniak in Gegenwart einer Base und von katalytischen Mengen eines Reduktionsmittels bei einer Temperatur von 60 bis 150°C und einem Druck von 1 bis 30 bar vornimmt.

2. Verfahren nach Anspruch 1, dadurch gekennzeichnet, daß man die Behandlung mit wäßriger Ammoniaklösung vornimmt.

3. Verfahren nach Anspruch 1 oder 2, dadurch gekennzeichnet, daß man je mol 1,4-Dihydroxyanthrachinon 3 bis 20 mol Ammoniak anwendet.

4. Verfahren nach den Ansprüchen 1 bis 3, dadurch gekennzeichnet, daß man als Base ein Alkalihydroxid verwendet.

5. Verfahren nach den Ansprüchen 1 bis 4, dadurch gekennzeichnet, daß man als Reduktionsmittel ein Alkalidithionit verwendet.

## Claims

1. A process for preparing 1-amino-4-hydroxyanthraquinone by treating 1,4-dihydroxyanthraquinone with ammonia in an aqueous medium, which comprises treating with ammonia in the presence of a base and of a catalytic amount of a reducing agent at from 60 to 150°C and at from 1 to 30 bar.

2. A process as claimed in claim 1, wherein the ammonia is used in the form of an aqueous solution.

3. A process as claimed in claim 1 or 2, wherein the amount of ammonia used per mole of 1,4-dihydroxyanthraquinone is from 3 to 20 mol.

4. A process as claimed in any of claims 1 to 3, wherein the base used is an alkali metal hydroxide.

5. A process as claimed in any of claims 1 to 4, wherein the reducing agent used is an alkali metal dithionite.

## Revendications

1. Procédé de préparation de 1-amino-4-hydroxyanthraquinone par traitement de 1,4-dihydroxyanthraquinone par de l'ammoniac en milieu aqueux, caractérisé en ce que l'on procède au traitement par l'ammoniac en présence d'une base et de quantités catalytiques d'un réducteur, à une température de 60 à 150°C et sous une pression de 1 à 30 bar.

2. Procédé selon la revendication 1, caractérisé en ce que l'on procède au traitement avec une solution aqueuse d'ammoniac.

3. Procédé selon la revendication 1 ou 2, caractérisé en ce que l'on utilise 3 à 20 moles d'ammoniac par mole de 1,4-dihydroxyanthraquinone.

4. Procédé selon l'une quelconque des revendications 1 à 3, caractérisé en ce que l'on utilise un hydroxyde de métal alcalin comme base.

5. Procédé selon l'une quelconque des revendications 1 à 4, caractérisé en ce que l'on utilise un dithionite de métal alcalin comme réducteur.
